# EUROPEAN PATENT APPLICATION

(11) **EP 4 424 643 A1**
(43) Date of publication of application: **04.09.2024**
(21) Application number: 23382201.4
(22) Date of filing: 03.03.2023
(51) Int. Cl.: C01G 49/00, C01G 49/06

(54) **SYNTHESIS OF PIEZOMAGNETIC EPSILON-FE2O3 CRYSTALS**

(71) Applicant: Consejo Superior De Investigaciones Científicas, 28006 Madrid (ES)
(72) Inventor: Khanam, Naureen, Barcelona (ES); Gich Garcia, Martí, Barcelona (ES); Carpenter, Michael A., Cambridge (GB); Haines, Charles Robert Sebastian, Cambridge (GB)
(74) Representative: Pons

(57) **Abstract**

The present invention discloses an up-scalable synthesis method of piezomagnetic ε-Fe₂O₃ nanoparticles with sizes above 25 nm, and its further processing under mechanical straining, for example by applying high pressures and temperatures, to induce magnetization into crystals or parts made of ε-Fe₂O₃. This processing can take advantage of the discovered piezomagnetic properties of ε-Fe₂O₃ to obtain sintered magnetized parts suitable for integration into planar microstrip circulators for the forecasted 6G evolution of wireless communications. Therefore, it further discloses the use of the piezomagnetic form of ε-Fe₂O₃ for non-reciprocal devices such as circulators, for wireless communications.

## Description

The present invention discloses a new up-scalable synthesis of ε-Fe₂O₃ nanoparticles with sizes above 25 nm, and its processing under high pressures and temperatures. Furthermore, the invention discloses a piezomagnetic form of ε-Fe₂O₃, its synthesis and use in different applications.

### BACKGROUND ART

ε-Fe₂O₃ is an orthorhombic polymorph of iron (III) oxide. It presents a large magnetic anisotropy that makes it interesting for technological applications related to magnetic memories and to the development of self-biased non-reciprocal devices which are appealing for the forthcoming generations of wireless communications.

In particular, ε-Fe₂O₃ is appealing to develop miniaturized non-reciprocal devices such as circulators, for the next generation of wireless communications (6G), which will tentatively operate at frequencies above 100 GHz, still not defined. Circulators exploit the non-reciprocal interaction of the electromagnetic waves with insulating magnetic materials, typically iron-based magnetic oxides known as ferrites, especially at frequencies in the vicinity of the ferromagnetic resonance (FMR) frequency of such materials. A key point to allow miniaturization and cost reduction is that these new devices are self-biased, i.e. that their operation does not require external magnetic fields to magnetize the ferrites, as it is presently the case for circulators that can operate above 100 GHz. This requires that the circulator uses pre-magnetized ferrites that present a FMR in the range of the transmitted waves (i.e. above 100 GHz for 6G applications). However, the FMR of the state of the art engineering ferrites (spinels, garnets, hexagonal ferrites) are well below 100 GHz, and can only be increased to above 100 GHz by applying external magnetic fields. Therefore, it is crucial to have suitable ferrites with FMR above 100 GHz, that can be sintered, shaped into suitable parts and magnetized.

In these regards, the interest in ε-Fe₂O₃ is that it presents a FMR close to 180 GHz, and this FMR can be broadly tuned from 40 GHz to 200 GHz by appropriate substitutions of Fe³⁺ by other transition metals. An important limitation for the use of ε-Fe₂O₃ in applications is that it is required that said material retains its remanent magnetization for long periods of time (e.g. memories, self-biased non-reciprocal devices). Indeed, we have observed that ε-Fe₂O₃ nanoparticles with sizes in the range of 20-25 nm are still affected by superparamagnetic relaxation, while in the case of the larger particles of high aspect ratio prepared following the reverse micelle method [3] these effects are not observed. Therefore it is critical to achieve nanoparticles of ε-Fe₂O₃ with sizes above 25 nm.

ε-Fe₂O₃ is typically obtained in the form of nanoparticles. The ε-Fe₂O₃ crystals transform to the stable polymorph α-Fe₂O₃ if their size exceeds a critical value (-100 nm). Thus, an essential aspect of stabilizing this polymorph is limiting the growth of the crystals during high-temperature thermal treatments required for its formation (typically 900 °C to 1200°C). The growth limitation is commonly achieved by confining the particles within a hard matrix of silica.

In spite of the above limitation, different approaches for preparing ε-Fe₂O₃ result in nanoparticles of high aspect ratio with lengths that can in some cases exceed 1 µm. These preparation approaches include the reverse micelle sol-gel method and the use of a silica gel coating embedding ε-Fe₂O₃. These methods use group (II) metal ions specifically, Ba2+ ions, and surfactants, as support for the stabilization of ε-Fe₂O₃ in larger particle sizes. But both methods have the limitation of not being easily scalable. Reverse micelle method uses surfactants and organic solvents to prepare the micelles. Though this method is popular for preparing particles with controlled particle size, one of its major disadvantages is the challenges and costs of scaling it up due to the large amount of organic solvents used during the micelle formation. In the case of using a silica coating embedding ε-Fe₂O₃ to prepare larger sized ε-Fe₂O₃, the approach has potential in coating applications, but has similar disadvantages as the reverse micelle method regarding upscaling. In contrast, the sol-gel method allows preparing in one batch large amounts of ε-Fe₂O₃ compared to the other methods, but it has the drawback that the average sizes of the nanoparticles do not exceed ~25 nm.

A further problem addressed in the prior art is the need for the upscaling of the production of ε-Fe₂O₃ with typical sizes above 25 nm in order to be suitable for use in the industry.

Thus, a problem to be solved is finding a synthetic method that allows upscaling the production of ε-Fe₂O₃ with typical sizes exceeding 25 nm.

### SUMMARY OF THE INVENTION

The present invention discloses a novel method for the synthesis of piezomagnetic ε-Fe₂O₃ nanoparticles of size above 25nm. Upon the application of strain or elastic deformation on crystals or parts made from such piezomagnetic ε-Fe₂O₃, magnetization which can be permanent is induced into such crystals or pieces made of ε-Fe₂O₃. One example of a method to induce such magnetization by mechanical straining is Spark Plasma Sintering (SPS) treatments, by using high pressure and high temperature. Hence this further step of sintering offers an additional way of controlling the magnetization of sintered parts intended to be used in planar microstrip circulators.

A first aspect of the invention relates to a sol-gel synthetic method for obtaining piezomagnetic stabilized ε-Fe₂O₃ nanoparticles of size larger than 25 nm (measured for example by TEM, using the software imaged), particularly a sol-gel method using as cations Y⁺³ Ce³⁺, La³⁺, Dy³⁺, Sb³⁺, Cd²⁺, Bi³⁺ cations. It comprises the steps of:
a) mixing, a stoichiometric amount of a solution consisting of water (preferably Mili-Q water) and alcohol (preferably absolute ethanol), with a stoichiometric solution consisting of Fe(NO₃)₃.9H₂O and the said cations nitrate hexahydrate wherein content of the cations is ranging between 3 % at. to 40 % at., and more preferably 5% at. to 25% at.,
b) adding an organosilicate, preferably tetraethyl orthosilicate (TEOS), or a silica precursor, preferably sodium silicate, to the mixture obtained in step (a), and stirring for a period of at least 2 h, preferably using a syringe pump, wherein the molar ratio organosilicate to water to alcohol (preferably of TEOS: ethanol: H₂O), or the molar ratio of silica precursor: alcohol: H₂O, is 1:5:6,
c) carrying out gelation of the mixture obtained in step (b) during a period of time of at least 7 days,
d) carrying out syneresis of the mixture obtained in step (c),
e) grinding the gel obtained in step (d) and annealing the gel at a preferred temperature of 1050-1150 °C, preferably 1100 °C, for at least 3 h, preferably at a rate of 70-90 °C/h, more preferably 80 °C/h, and
f) etching the powder obtained in step (e) in a base solution, preferably a NaOH solution, at a concentration of 3-12 M, more preferably 6-10 M, even more preferably 10 M, at a preferred temperature of 60-100 °C, more preferably 80 °C, under reflux for at least 24 h, more preferably for at least 48 h.

Silica precursors are to be understood according to the present invention as precursors that can polymerize by any polymerization technique known in the state of the art, which result in the formation of a SiOz matrix after their polymerization. Silica precursors comprise a compound that is capable of forming silica with or without after a heat treatment. The application of a heat treatment to the silica, preferably at temperatures above 500 °C, and even more preferably at a temperature of greater than or equal to 800° C, will densify such silica, which will aid the subsequent formation of the ε-Fe₂O₃ nanoparticles inside the silica matrix. The silica precursor may be chosen from organic, organometallic and mineral compounds comprising silicon.

These silica precursors may be silica or colloidal silica precursors. Typically, the term colloidal silica denotes amorphous silica particles suspended in a solvent.

A preferred example of such silica precursors is a metal silicate, more preferably sodium silicate.

Non-limiting examples of such silica precursors (that polymerize to give a SiOz matrix) include silicon alcoxides, silicon tetrachloride, silicates such as ammonium silicate or silicic acid, sodium silicate, and mixtures thereof.

Non-limiting examples of silicon alcoxides include tetramethoxysilane, tetraethyl orthosilicate (TEOS), (3-mercaptopropyl)-trimethoxysilane, (3-aminopropyl)triethoxysilane, N-(3-trimethoxysilylpropyl)-pyrrole, 3-(2,4 dinitrophenylamino)propyltriethoxysilane, N-(2-aminoethyl)-3-aminopropyltrimethoxysilane, phenyltriethoxysilane and methyltriethoxysilane. Among these silicon alcoxydes TEOS is particularly preferred.

In an embodiment of the invention the cation nitrate hexahydrate (X(NO₃)₃.6H₂O) is Y(NO₃)₃.6H₂O, wherein the content of Y⁺³ cations ranges between 5 % at. to 25 % at., or is Ce(NO₃)₃.6H₂O, wherein the content of Ce⁺³ cations is from 3% at. to 5 % at.

Moreover, it was surprisingly found that the ε-Fe₂O₃ nanoparticles produced according to the method of the invention with steps a) to f), show piezomagnetic properties. Moreover, it was also found that if these ε-Fe₂O₃ nanoparticles were strained or deformed elastically by means of the application of a pressure or force, with or without the presence of concurrent heating, a magnetic field got induced into the crystals or pieces made up of these piezomagnetic ε-Fe₂O₃ nanoparticles, which could also induce a permanent magnetic field into the crystals or pieces.

Piezomagnetism is defined as a linear coupling between the magnetic polarization and mechanical strain. In other words, a piezomagnetic material generates a magnetic field upon application of mechanical strain, and is mechanically strained after application of an external magnetic field to the material.

In a preferred embodiment, the synthetic method includes after the application of step f) a further application of a step g) of mechanical deformation or strain, preferably a further step g) of pressing and sintering the product obtained in step f), preferably at a pressure between 50 MPa and 250 MPa and a temperature between 250 °C and 900 °C, and preferably by means of Spark Plasma Sintering. This induces magnetization such as for example permanent magnetization into the piezomagnetic ε-Fe₂O₃ nanoparticles.

Another aspect of the invention discloses piezomagnetic ε-Fe₂O₃ nanoparticles having a stable orthorhombic polymorph structure and a particle size above 25 nm (measured for example with TEM, using the software imaged), ranging preferably between 31 nm and 72 nm, wherein said piezomagnetic ε-Fe₂O₃ nanoparticles are confined within a matrix of silica, wherein the weight percentage of the piezomagnetic ε-Fe₂O₃ nanoparticles with respect to silica matrix is preferably in the range 25% wt. :75% wt., and wherein said piezomagnetic ε-Fe₂O₃ nanoparticles are stabilized with a content of a metal cation selected from at least one of Y³⁺, Ce³⁺, La³⁺, Dy³⁺, Sb³⁺, Cd²⁺, Bi³⁺ cations, ranging between 3% to 40% at., more preferably between 5 % at. to 25 % at., and wherein the Fe⁺³ cations of the stable orthorhombic polymorph structure are not substituted by said metal cations.

The size of the nanoparticles (in diameter) according to the invention was measured by transmission electron microscopy (TEM), using the imaged software to measure the length and width of typically rod-shaped or roughly elliptical particles, measuring both the shortest and longest dimensions of the nanoparticles.

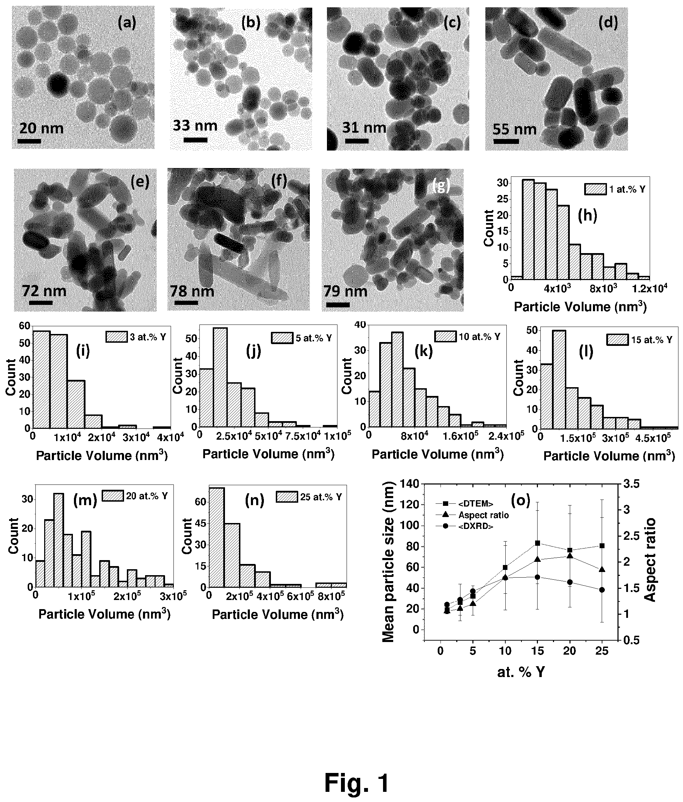

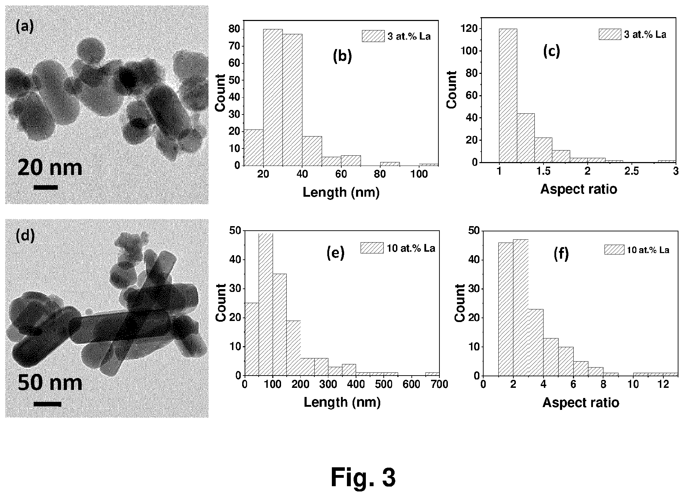

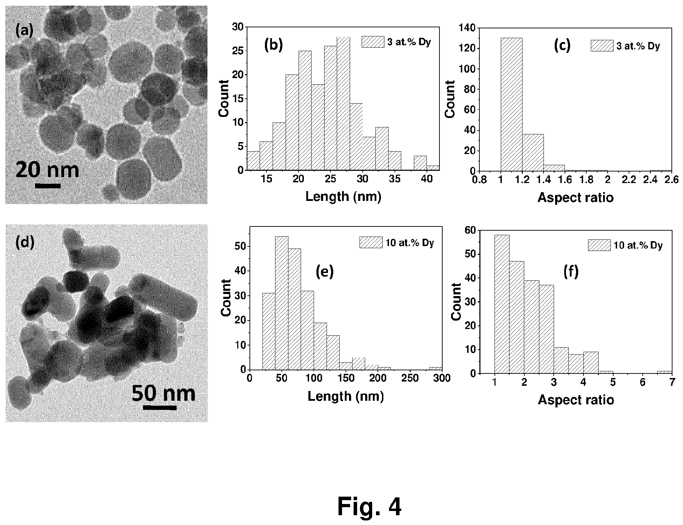

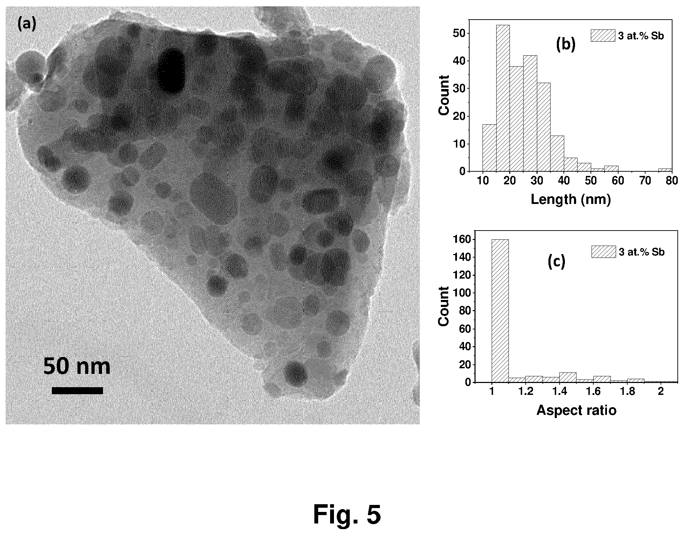

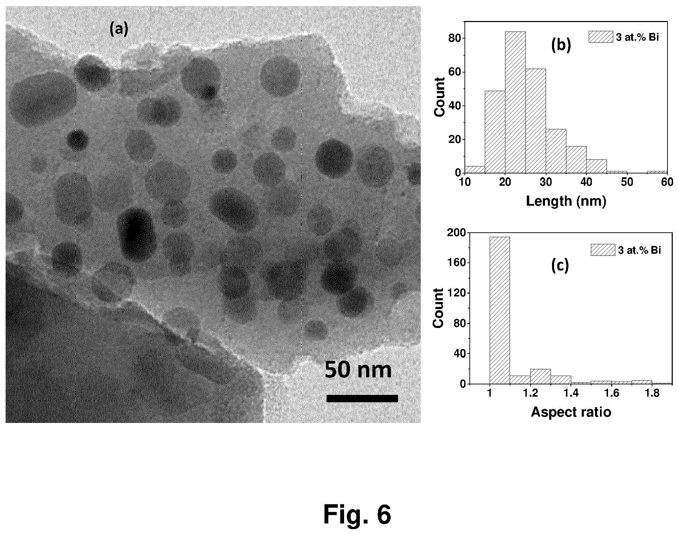

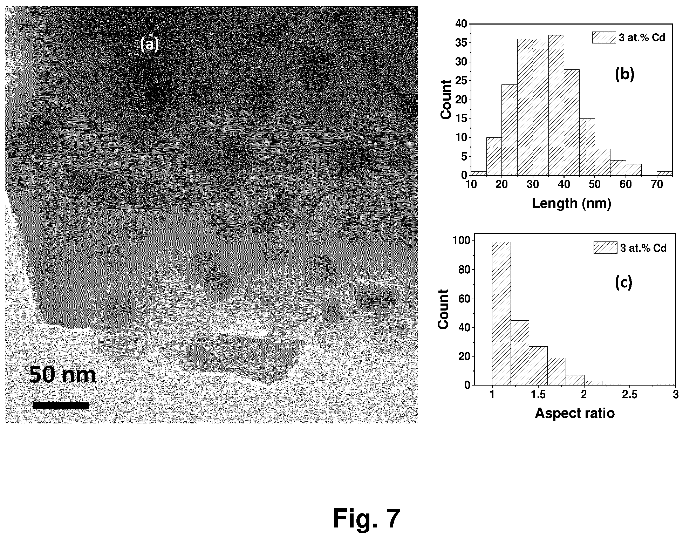

The size distributions observed in Figs. 1-7 below represent the length of such nanoparticles (largest particle dimension), and their aspect ratio can be obtained by dividing the length by the width (shortest particle dimension, in the direction perpendicular to the length).

A particular advantageous aspect of the invention is the permanent magnetization of said ε-Fe₂O₃ nanoparticles, wherein the nanoparticles are obtainable by pressing and sintering at a pressure between 50 MPa and 250 MPa and a temperature between 250 °C and 900 °C, preferably by means of Spark Plasma Sintering, resulting in permanently-magnetized ε-Fe₂O₃ nanoparticles.

In a further embodiment the piezomagnetic ε-Fe₂O₃ nanoparticles are stabilized with the metal cations Y³⁺ ranging between 5 % at. to 25 % at., or with the metal Ce³⁺ cations ranging between 3% at. to 5% at.

Another aspect is the synthetic method for producing the above disclosed ε-Fe₂O₃ nanoparticles which incorporates into the solutions other cations significantly larger than Fe³⁺ (rFe³⁺=69 pm). It was found according to the present invention that when using such larger cations, these are not incorporated into the ε-Fe₂O₃ structure. Furthermore, the cation selection is crucial, and will be based on the existence of common precursors that are soluble in the hydroethanolic medium.

In one embodiment, we have developed a method to prepare ε-Fe₂O₃ nanoparticles of increased sizes by incorporating Y³⁺ (rY³⁺=104 pm) which is the most satisfactory concerning upscaling and particle sizes. In another, we have developed the same approach with other cations significantly larger than Fe³⁺ and which can be solubilized in the synthesis sol: Ce³⁺, La³⁺, Dy³⁺, Sb³⁺, Cd²⁺, Bi³⁺.

In a preferred embodiment the cation nitrate hexahydrate is Y(NO₃)₃·6H₂O, wherein content of Y⁺³ cations is ranging between 5 % at. to 25 % at. or it is Ce(NO₃)_{3·}6H₂O, wherein the content of Ce⁺³ cations is of 3 % at. to 5% at.

The characterization of the materials containing Y³⁺ by transmission electron microscopy (see Fig. 1) shows size distributions that clearly exceed 25 nm. The effect is more obvious for larger content of the Y³⁺ cation. The characterization by X-ray diffraction (see Table 1) also confirms the increase of the average crystal sizes and the lattice parameters indicate that Y³⁺ is not incorporated in the ε-Fe₂O₃ structure.

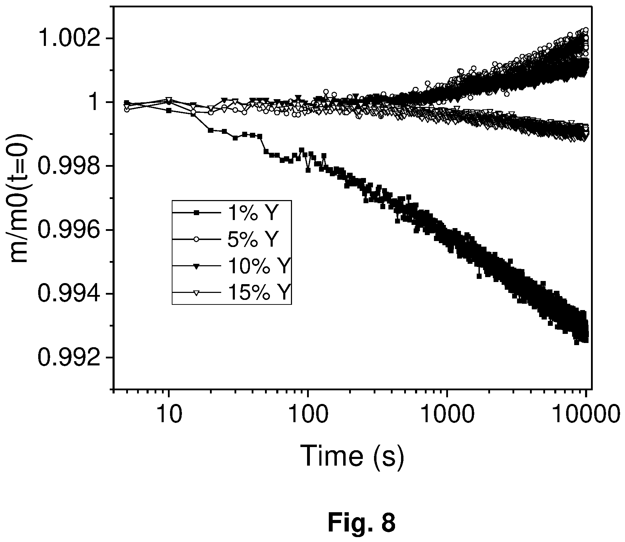

Compared to the current approaches to preparing large ε-Fe₂O₃ nanoparticles known in the state of the art, the method of the present invention allows increasing by a factor of ~20 the amount of ε-Fe₂O₃ obtained in one batch. In this way, we solve the problem of producing larger particle sizes of ε-Fe₂O₃ in large amounts in one batch, without using organic solvents or toxic surfactants. The method is sustainable and appealing for industrial production of this ε-Fe₂O₃ phase. The larger nanoparticles do not show magnetic relaxation (see figure 8 below for the case of Y³⁺ addition).

In the examples using Ce³⁺, La³⁺, Dy³⁺, Sb³⁺, Cd²⁺, Bi³⁺, the effect of cation addition is also to increase the size of the particles (tables 2 to 5), although in some of these impurities are also contained. For Cd²⁺ and Bi³⁺, a crystallization of the SiOz matrix is observed which entails the formation of large amounts of hematite. In the case of Sb³⁺, the X-ray diffraction before removing the SiOz matrix does not show either SiOz crystallization, nor formation of large amounts of hematite, nor the presence of other impurity phases.

Another aspect of the invention is the use of the said piezomagnetic ε-Fe₂O₃ nanoparticles for the manufacturing of a wireless communication device, particularly a self-biased non-reciprocal device.

A further aspect is a wireless communication device, comprising the said piezomagnetic ε-Fe₂O₃ nanoparticles wherein the wireless communication device is preferably a self-biased non-reciprocal device.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings and sequence listing are provided by way of illustration and are not intended to be limiting of the present invention.

### BRIEF DESCRIPTION OF THE DRAWINGS

**Fig.1****.** TEM images of ε-Fe₂O₃ nanoparticles prepared with different Y³⁺ content. (a-g) 1,3,5,10,15,20 and 25 at. % Y chronologically. (h-n) Particle volume distribution of the corresponding samples calculated from more than 150 particles. (o) Mean particle size calculated from TEM and XRD data with the Aspect ratio of the samples.
**Fig. 2****.** (a) TEM image of ε-Fe₂O₃ nanoparticles prepared 3 at. % Ce³⁺. (b) Size distribution and (c) Aspect ratio resulting from measuring 326 particles from different TEM images.
**Fig. 3****.** (a) TEM image of ε-Fe₂O₃ nanoparticles prepared with 3 at. % La³⁺. (b & c) Size distribution and aspect ratio distribution resulting from measuring more than 200 particles from different TEM images. (d) TEM image of ε-Fe₂O₃ nanoparticles prepared with 10 at. % La³⁺. (e & f) Size distribution and aspect ratio distribution resulting from measuring more than 150 particles from different TEM images.
**Fig. 4****.** (a) TEM image of ε-Fe₂O₃ nanoparticles prepared with 3 at. % Dy³⁺. (b & c) Size distribution and aspect ratio distribution resulting from measuring 175 particles from different TEM images. (d) TEM image of ε-Fe₂O₃ nanoparticles prepared with 10 at. % Dy³⁺. (e & f) Size distribution and aspect ratio distribution resulting from measuring more than 200 particles from different TEM images
**Fig. 5****.** (a) TEM image of ε-Fe₂O₃ nanoparticles prepared with 3 at. % Sb³⁺. (b & c) Size distribution and aspect ratio distribution resulting from measuring more than 200 particles from different TEM images.
**Fig. 6****.** (a) TEM image of ε-Fe₂O₃ nanoparticles prepared with 3 at. % Bi³⁺. (b & c) Size distribution and aspect ratio distribution resulting from measuring 250 particles from different TEM images.
**Fig. 7** (a) TEM image of ε-Fe₂O₃ nanoparticles prepared with 3 at. % Cd²⁺. (b & c) Size distribution and aspect ratio distribution resulting from measuring 200 particles from different TEM images.
**Fig. 8****.** Magnetic relaxation expressed as the variation with time of the remanent magnetic moment relative to the moment at time zero for ε-Fe₂O₃ nanoparticles prepared with different Y³⁺ contents in the sol.

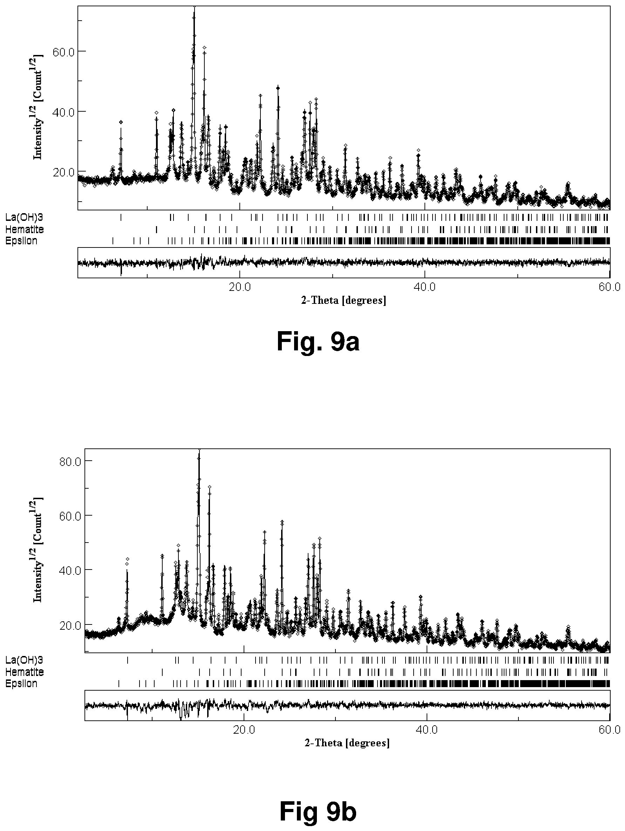

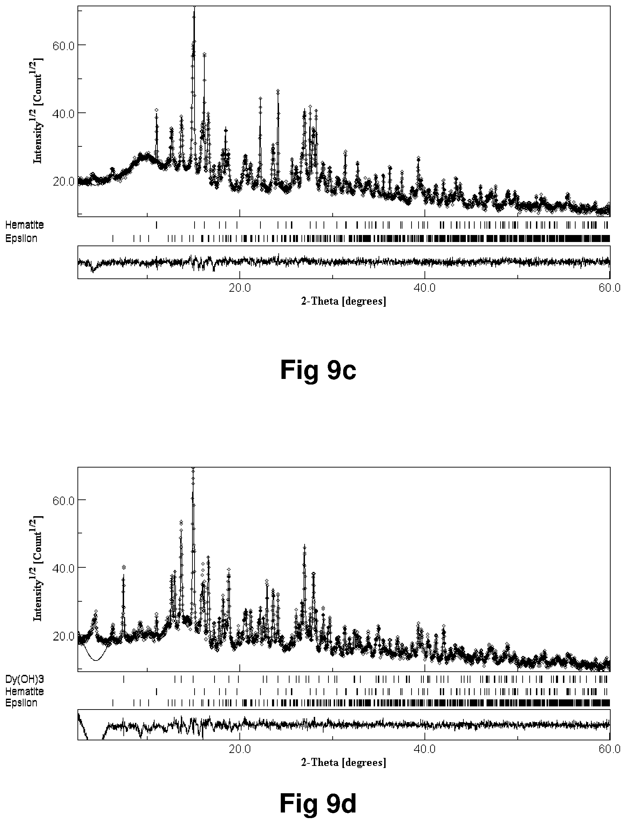

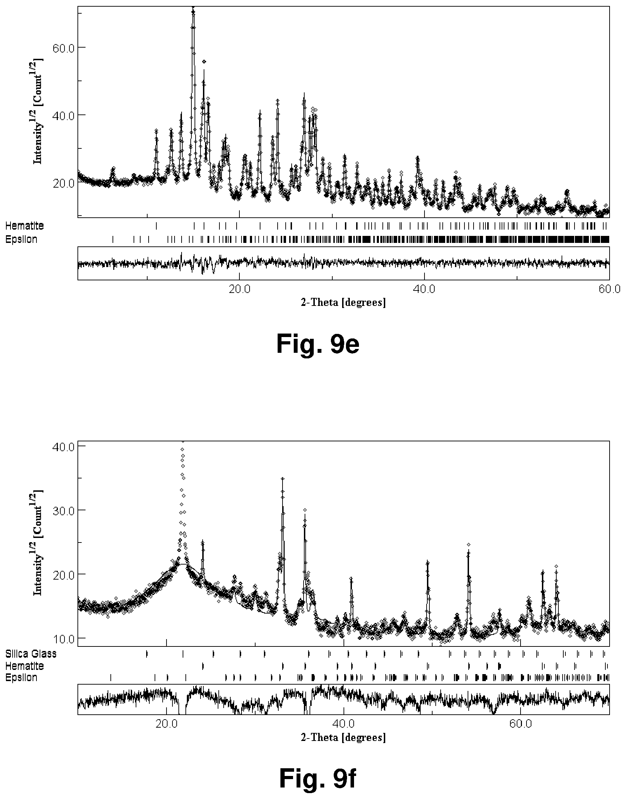

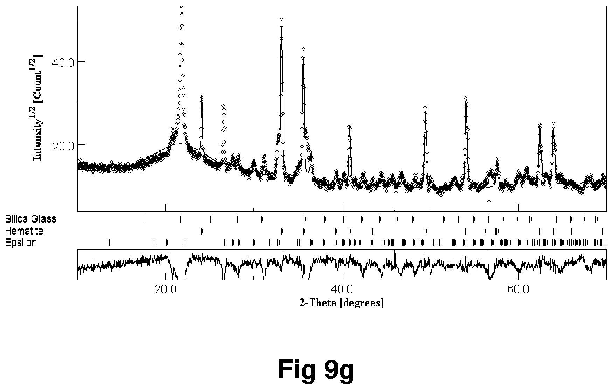

**Fig. 9****.** X-Ray diffraction diagram of
   a) La³⁺ 3 at. %
   b) La³⁺ 10 at. %
   c) Dy³⁺ 3 at. %
   d) Dy³⁺ 10 at. %
   e) Sb³⁺ 3 at. %
   f) Bi³⁺ 3 at. % with SiOz matrix not removed (large peak at 21 degree is crystalline SiO₂).
   g) Cd²⁺ 3 at. % with SiO₂ matrix not removed (large peak at 21 degree is crystalline SiO₂).

### EXAMPLES

### Example 1- Preparation of Y-stabilized ε-Fe₂O₃

ε-Fe₂O₃ nanoparticles were prepared by sol-gel method using silica matrix as a hard template including Y³⁺ in the solution. Seven samples were prepared by changing the Yttrium content. Fe(NO₃)₃.9H₂O and Y(NO₃)₃.6H₂O from *Thermo Fisher* and Tetraethyl orthosilicate(TEOS) from *Sigma Aldrich* were used as precursors for the metal oxide and SiO₂, respectively. Milli-Q water and Absolute Ethanol (PanReac AppliChem) were used as the solvents.

20 mL TEOS was taken as the basis of all calculation while keeping weight percentage of the iron oxide with respect to silica as 25%:75%. The molar ratio of TEOS: Ethanol: H₂O was taken as 1:5:6. Different samples were prepared by changing the wt.% of Y ranging from 1% to 25% of the total metal content.

First, stoichiometric amounts of H₂O and Ethanol were mixed in a beaker, where then the desired stoichiometric amounts of Y(NO₃)₃.6H₂O and Fe(NO₃)₃.9H₂O were dissolved. After the metal precursors were dissolved properly, TEOS was added to this solution at 0.7 ml/min rate using a syringe pump at high stirring rate. After adding TEOS, the solution was left under stirring for 2 hours. Finally, the solution was equally distributed in 4 petri dishes of 9 cm diameter that were kept inside a plastic box for further gelation and syneresis. The gelation took place after ~7 days. The as-prepared gel was grinded manually and annealed at 1100°C for 3 hours at a rate of 80°C/h.

Finally, the nanoparticles were collected by etching the as-prepared powders in a 10 M NaOH solution at 80°C under reflux for 48 hours. ~1.2 g of powder was collected for each batch.

### Example 2-Preparation of Ce-stabilized ε-Fe₂O₃ nanoparticles

Preparation of ε-Ce_{0.06}Fe_{1.94}O₃ nanoparticles were prepared by sol-gel method using silica matrix as a hard template Fe(NO₃)₃.9H₂O and Ce(NO₃)₃.6H₂O from *Thermo Fisher* and Tetraethyl orthosilicate(TEOS) from *Sigma Aldrich* were used as the metal oxide and SiOz precursors respectively. Milli-Q water and Absolute Ethanol (PanReac AppliChem) were used as the solvents.

10 mL TEOS was taken as the basis of all calculation while keeping weight percentage of the iron oxide with respect to silica as 25%:75%. The molar ratio of TEOS: Ethanol: H₂O was taken as 1:5:6. Atomic % ratio of Ce :Fe were 3:97.

First, a stoichiometric amount of H₂O and Ethanol were taken in a beaker and mixed together followed by addition of stoichiometric amount of Ce(NO₃)₃.6H₂O and Fe(NO₃)₃.9H₂O. After the metal precursors were dissolved properly, TEOS was added to this solution at 0.7 ml/min rate using a syringe pump at high stirring rate. After adding TEOS, the solution was left for stirring for 2 hours. Finally, the solution was equally distributed in 3 petri dishes of 9 cm diameter and was kept inside a plastic box for further gelation and syneresis. The gelation took place after ~7 days. The as prepared gel was grinded manually followed by annealing at 1100°C for 3 hours at a rate of 80°C/h.

Finally, the nanoparticles were collected by etching the as prepared powders in 10 M NaOH solution at 80°C under reflux for 48 hours. ~0.6 g of powder was collected.

### Example 3-Preparation of La-stabilized ε-Fe₂O₃ nanoparticles

Preparation of ε-LaₓFe₂₋ₓO₃nanoparticles were prepared by sol-gel method using silica matrix as a hard template. Fe(NO₃)₃.9H₂O and La(NO₃)₃.6H₂O from *Thermo Fisher* and Tetraethyl orthosilicate(TEOS) from *Sigma Aldrich* were used as the metal oxide and SiOz precursors respectively. Milli-Q water and Absolute Ethanol (PanReac AppliChem) were used as the solvents.

20 mL TEOS was taken as the basis of all calculation while keeping weight percentage of the iron oxide with respect to silica as 25%:75%. The molar ratio of TEOS: Ethanol: H₂O was taken as 1:5:6. Two samples were prepared for 3 atomic % and 10 at.% ratio of La.:Fe.

First, a stoichiometric amount of H₂O and Ethanol were taken in a beaker and mixed together followed by addition of stoichiometric amount of La(NO₃)₃.6H₂O and Fe(NO₃)₃.9H₂O. After the metal precursors were dissolved properly, TEOS was added to this solution at 0.7 ml/min rate using a syringe pump at high stirring rate. After adding TEOS, the solution was left for stirring for 2 hours. Finally, the solution was equally distributed in 3 petri dishes of 9 cm diameter and was kept inside a plastic box for further gelation and syneresis. The gelation took place after ~7 days. The as prepared gel was grinded manually followed by annealing at 1100°C for 3 hours at a rate of 80°C/h.

Finally, the nanoparticles were collected by etching the as prepared powders in 10 M NaOH solution at 80°C under reflux for 48 hours. ~1.2 g of powder was collected.

### Example 4-Preparation of Dy-stabilized ε-Fe₂O₃ nanoparticles

Preparation of ε-DyₓFe₂₋ₓO₃ nanoparticles were prepared by sol-gel method using silica matrix as a hard template. Fe(NO₃)₃.9H₂O and Dy(NO₃)₃.5H₂O from *Thermo Fisher* and Tetraethyl orthosilicate(TEOS) from *Sigma Aldrich* were used as the metal oxide and SiOz precursors respectively. Milli-Q water and Absolute Ethanol (PanReac AppliChem) were used as the solvents.

20 mL TEOS was taken as the basis of all calculation while keeping weight percentage of the iron oxide with respect to silica as 25%:75%. The molar ratio of TEOS: Ethanol: H₂O was taken as 1:5:6. Two samples were prepared for 3 at. % and 10 at. % ratio of Dy.:Fe . First, a stoichiometric amount of H₂O and Ethanol were taken in a beaker and mixed together followed by addition of stoichiometric amount of Dy(NO₃)₃.5H₂O and Fe(NO₃)₃.9H₂O. After the metal precursors were dissolved properly, TEOS was added to this solution at 0.7 ml/min rate using a syringe pump at high stirring rate. After adding TEOS, the solution was left for stirring for 2 hours. Finally, the solution was equally distributed in 3 petri dishes of 9 cm diameter and was kept inside a plastic box for further gelation and syneresis. The gelation took place after ~7 days. The as prepared gel was grinded manually followed by annealing at 1100°C for 3 hours at a rate of 80°C/h.

Finally, the nanoparticles were collected by etching the as prepared powders in 10 M NaOH solution at 80°C under reflux for 48 hours. ~1.2 g of powder was collected.

### Example 5-Preparation of Sb-stabilized ε-Fe₂O₃ nanoparticles

Preparation of ε-Sb_{0.06}Fe_{1.94}O₃ nanoparticles were prepared by sol-gel method using silica matrix as a hard template. Fe(NO₃)₃.9H₂O from *Thermo Fisher* and SbCl₃ and Tetraethyl orthosilicate(TEOS) from *Sigma Aldrich* were used as the metal oxide and SiO₂ precursors respectively. Milli-Q water and Absolute Ethanol (PanReac AppliChem) were used as the solvents. As SbCl₃ is not soluble in the hydroethanolic mixture, glacial acetic acid from *Labbox Labware S.L*. was used as a chelating agent for stabilization.

20 mL TEOS was taken as the basis of all calculation while keeping weight percentage of the iron oxide with respect to silica as 25%:75%. The molar ratio of TEOS: Ethanol: H₂O was taken as 1:5:6.

First, a stoichiometric amount of H₂O and Ethanol were taken in a beaker and mixed together followed by addition of stoichiometric amount of SbCl₃ and Fe(NO₃)₃.9H₂O. Also 20 mL glacial acetic acid was added in this solution to get a clear solution. After the metal precursors were dissolved properly, TEOS was added to this solution at 0.7 ml/min rate using a syringe pump at high stirring rate. After adding TEOS, the solution was left for stirring for 2 hours. Finally, the solution was equally distributed in 6 petri dishes of 9 cm diameter and was kept inside a plastic box for further gelation and syneresis. The gelation took place after ~3 days. The as prepared gel was grinded manually followed by annealing at 1100°C for 3 hours at a rate of 80°C/h.

Finally, the nanoparticles were collected by etching the as prepared powders in 10 M NaOH solution at 80°C under reflux for 48 hours. -1.2 g of powder was collected.

### Example 6-Preparation of Bi-stabilized ε-Fe₂O₃ nanoparticles

Preparation of ε-Bi_{0.06}Fe_{1.94}O₃ nanoparticles were prepared by sol-gel method using silica matrix as a hard template. Fe(NO₃)₃.9H₂O from *Thermo Fisher* and Bi(CH₃COO)₃ and Tetraethyl orthosilicate(TEOS) from *Sigma Aldrich* were used as the metal oxide and SiO₂ precursors respectively. Milli-Q water and Absolute Ethanol (PanReac AppliChem) were used as the solvents. As Bi(CH₃COO)₃ is not soluble in the hydroethanolic mixture, glacial acetic acid from *Labbox Labware S.L*. was used as a chelating agent for stabilization. 10 mL TEOS was taken as the basis of all calculation while keeping weight percentage of the iron oxide with respect to silica as 25%:75%. The molar ratio of TEOS: Ethanol: H₂O was taken as 1:5:6.

First, a stoichiometric amount of H₂O and Bi(CH₃COO)₃ was taken in a beaker and mixed together with 10 mL glacial acetic acid followed by addition of stoichiometric amount of ethanol and Fe(NO₃)₃.9H₂O. After the metal precursors were dissolved properly, TEOS was added to this solution at 0.7 ml/min rate using a syringe pump at high stirring rate. After adding TEOS, the solution was left for stirring for 2 hours. Finally, the solution was equally distributed in 6 petri dishes of 9 cm diameter and was kept inside a plastic box for further gelation and syneresis. The gelation took place after ~3 days. The as prepared gel was grinded manually followed by annealing at 1100°C for 3 hours at a rate of 80°C/h.

Finally, the nanoparticles were collected by etching the as prepared powders in 10 M NaOH solution at 80°C under reflux for 48 hours. ~0.6 g of powder was collected.

### Example 7-Preparation of Cd-stabilized ε-Fe₂O₃ nanoparticles

Preparation of ε-Cd_{0.06}Fe_{1.94}O₃ nanoparticles were prepared by sol-gel method using silica matrix as a hard template. Fe(NO₃)₃.9H₂O from *Thermo Fisher* and Cd(CH₃COO)₂ and Tetraethyl orthosilicate(TEOS) from *Sigma Aldrich* were used as the metal oxide and SiO₂ precursors respectively. Milli-Q water and Absolute Ethanol (PanReac AppliChem) were used as the solvents.

10 mL TEOS was taken as the basis of all calculation while keeping weight percentage of the iron oxide with respect to silica as 25%:75%. The molar ratio of TEOS: Ethanol: H₂O was taken as 1:5:6.

First, a stoichiometric amount of H₂O and Ethanol were taken in a beaker and mixed together followed by addition of stoichiometric amount of Cd(CH₃COO)₂ and Fe(NO₃)₃.9H₂O. After the metal precursors were dissolved properly, TEOS was added to this solution at 0.7 ml/min rate using a syringe pump at high stirring rate. After adding TEOS, the solution was left for stirring for 2 hours. Finally, the solution was equally distributed in 3 petri dishes of 9 cm diameter and was kept inside a plastic box for further gelation and syneresis. The gelation took place after ~7 days. The as prepared gel was grinded manually followed by annealing at 1100°C for 3 hours at a rate of 80°C/h.

Finally, the nanoparticles were collected by etching the as prepared powders in 10 M NaOH solution at 80°C under reflux for 48 hours. ~0.6 g of powder was collected.

### 4-Characterization ε-Fe₂O₃ nanoparticles of the above examples

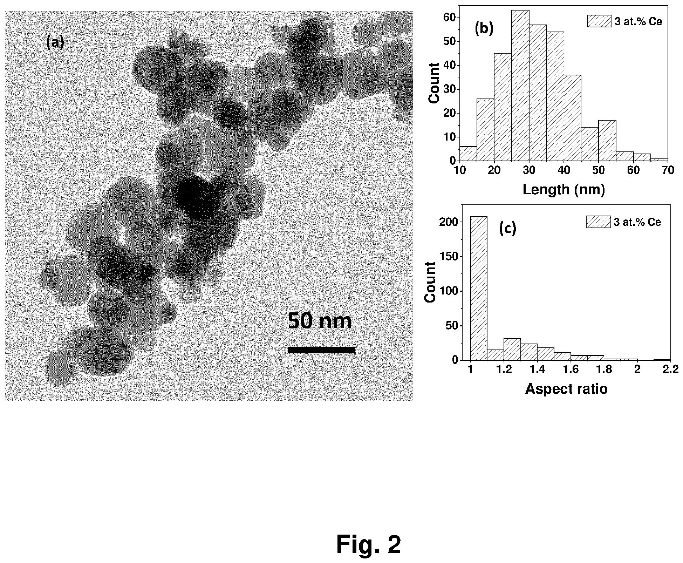

The particle size of ε-Fe₂O₃ increases with the amount of Y³⁺ content during the preparation method. Until 15% Y content, we see the increase of the total particle volume (Figure 1). After that the volume distribution shows decrease for 20% and 25% Y content. From the TEM images in Figure 2, we notice that particle shapes start to distort and assumingly start to melt for 20% Y content. Also, the lattice parameters of ε-Fe₂O₃ does not change for different Y content (Table 1) which means that Y³⁺ does not substitute any Fe³⁺ cation in the ε-Fe₂O₃ structure. The amount of hematite content varied from 5 to 20% for all the samples. Also, larger particles (5%, 10%, 15% Y) are magnetically more stable with time compared to the smaller particles (1% Y) (see Figure 8) which ensures the prominence of larger particles for the device application. Similar characteristics are seen in the case of Ce³⁺. TEM image shows rod shapes of the particles while the lattice parameters are similar to the ε-Fe₂O₃.

In tables 1 to 5 the crystal sizes of ε-Fe₂O₃ nanoparticles prepared with different contents and type of metals are presented based on the X-Ray diffractograms.

**Table 1: Lattice parameters and average crystal size of ε-Fe₂O₃ nanoparticles prepared with different contents of Y³⁺.**

| **at. % Y³⁺** | **a (Å)** | **b (Å)** | **c (Å)** | **crystal size (Å)** |
|---|---|---|---|---|
| 1 | 5.0936(4) | 8.7897(8) | 9.4697(6) | 253±2 |
| 3 | 5.0924(3) | 8.7886(7) | 9.4725(6) | 301±2 |
| 5 | 5.0928(2) | 8.7869(4) | 9.4728(4) | 380±2 |
| 10 | 5.0929(2) | 8.7858(4) | 9.4722(3) | 512±4 |
| 15 | 5.0940(3) | 8.7848(5) | 9.4728(5) | 540±5 |
| 20 | 5.0929(3) | 8.7861(5) | 9.4741(5) | 478±6 |
| 25 | 5.0936(7) | 8.793(1) | 9.478(1) | 363±5 |

**Table 2: Lattice parameters and average crystal size of ε-Fe₂O₃ prepared with 3 at. % Ce³⁺.**

| **at. % Ce³⁺** | **a (Å)** | **b (Å)** | **c (Å)** | **crystal size (Å)** |
|---|---|---|---|---|
| 3 | 5.0926(4) | 8.7886(8) | 9.4742(7) | 333 ± 2 |

**Table 3: Lattice parameters and average crystal size of ε-Fe₂O₃ prepared with 3 at. % and 10 at. % La³⁺.**

| **at. % La³⁺** | **a (Å)** | **b (Å)** | **c (Å)** | **crystal size (Å)** |
|---|---|---|---|---|
| 3 | 5.0917(2) | 8.7866(5) | 9.4719(4) | 354 ± 2 |
| 10 | 5.0924(2) | 8.7860(6) | 9.4710(4) | 533 ± 7 |

**Table 4: Lattice parameters and average crystal size of ε-Fe₂O₃ prepared with 3 at. % and 10 at. % Dy³⁺.**

| **at. % Dy³⁺** | **a (Å)** | **b (Å)** | **c (Å)** | **crystal size (Å)** |
|---|---|---|---|---|
| 3 | 5.0955(3) | 8.7910(7) | 9.4736(6) | 296 ± 1 |
| 10 | 5.0928(4) | 8.7864(8) | 9.4748(8) | 470 ± 10 |

**Table 5: Lattice parameters and average crystal size of ε-Fe₂O₃ prepared with 3 at. % Sb³⁺**

| **at. % Sb³⁺** | **a (Å)** | **b (Å)** | **c (Å)** | **crystal size (Å)** |
|---|---|---|---|---|
| 3 | 5.0941(3) | 8.7894 (6) | 9.4783(5) | 273 ± 2 |

## Claims

1. A sol-gel method for obtaining stabilized piezomagnetic ε-Fe₂O₃ nanoparticles, comprising the following steps:
a. mixing, a stoichiometric amount of a solution consisting of water and alcohol with an stoichiometric solution consisting of Fe(NO₃)₃.9H₂O and X(NO₃)₃.6H₂O, wherein X refers to any of the Y³⁺, Ce³⁺, La³⁺, Dy³⁺, Sb³⁺, Cd²⁺, Bi³⁺ cations and wherein the content of the said cations ranges between 3% at. to 40% at.,
b. adding an organosilicate, preferably tetraethyl orthosilicate (TEOS), or a silica precursor, preferably sodium silicate, to the mixture obtained in step (a), and stirring during a period of time of at least 2 h, wherein the molar ratio organosilicate: alcohol: H₂O or the molar ratio silica precursor: alcohol: H₂O, is 1:5:6,
c. carrying out gelation of the mixture obtained in step (b) during a period of time of at least 7 days,
d. carrying out syneresis of the mixture obtained in step (c),
e. grinding the gel obtained in the step (d) and annealing the gel at preferred temperature of 1050-1150 °C for at least 3 h, preferably at a rate of 70-90 °C/h, and
f. etching the powder obtained in step (e) in a base solution, preferably a NaOH solution, preferably at a concentration of 3-12 M, at a preferred temperature of 60-100 °C under reflux for at least 24 h.

2. A sol-gel method according to claim 1 wherein the X(NO₃)₃.6H₂O is Y(NO₃)₃.6H₂O wherein content of Y⁺³ cations is ranging between 5 % at. to 25 % at., or is Ce(NO₃)₃.6H₂O wherein the content of Ce⁺³ cations is from 3 % at. to 5% at.

3. A sol-gel method according to claims 1 or 2, further comprising after step f), a step g) of pressing and sintering the product obtained, at a pressure between 50 MPa and 250 MPa and temperature between 250 °C and 900 °C, preferably by means of Spark Plasma Sintering, resulting in the induction of permanent magnetization of the ε-Fe₂O₃ nanoparticles.

4. Piezomagnetic ε-Fe₂O₃ nanoparticles obtained by a method according to any one of claims 1-3, which have a stable orthorhombic polymorph structure and a particle size above 25 nm, ranging preferably between 31 nm and 72 nm,
wherein the piezomagnetic ε-Fe₂O₃ nanoparticles are confined within a matrix of silica, wherein the weight percentage of the piezomagnetic ε-Fe₂O₃ nanoparticles with respect to silica matrix is preferably in the range 25%:75% wt.,
the piezomagnetic ε-Fe₂O₃ nanoparticles are stabilized with a content of a metal cation selected from at least one of Y³⁺, Ce³⁺, La³⁺, Dy³⁺, Sb³⁺, Cd²⁺, Bi³⁺ cations ranging between 3% to 40% at., more preferably between 5% at. to 25% at., and wherein the Fe⁺³ cations of the stable orthorhombic polymorph structure are not substituted by said metal cations.

5. Nanoparticles according to claim 4, wherein the metal cations are Y³⁺ cations ranging between 5 % at. to 25 % at. or Ce⁺³ cations ranging between 3% at. to 5% at.

6. Use of the piezomagnetic ε-Fe₂O₃ nanoparticles of claim 4 or 5, for the manufacture of a wireless communication device, particularly a self-biased non-reciprocal device.

7. Wireless communication device, comprising the ε-Fe₂O₃ piezomagnetic nanoparticles according to claim 4 or 5 wherein the wireless communication device is preferably a self-biased non-reciprocal device.
